# EUROPEAN PATENT SPECIFICATION

(11) **EP 4 268 565 B1**
(45) Date of publication and mention of the grant of the patent: **17.04.2024**
(21) Application number: 23164688.6
(22) Date of filing: 28.03.2023
(51) Int. Cl.: A01D 34/00, G05D 1/00

(54) **IMPROVED NAVIGATION FOR A ROBOTIC WORK TOOL SYSTEM**
VERBESSERTE NAVIGATION FÜR EIN ROBOTISCHES ARBEITSWERKZEUGSYSTEM
NAVIGATION AMÉLIORÉE POUR UN SYSTÈME D'OUTIL DE TRAVAIL ROBOTIQUE

(30) Priority: 28.04.2022 SE 2250506
(43) Date of publication of application: 01.11.2023
(73) Proprietor: Husqvarna AB, 561 82 Huskvarna (SE)
(72) Inventor: HALLIN, Peter, HABO (SE)

(56) References cited:
- EP-A1- 2 551 739
- WO-A1-2021/244594
- JP-B1- 5 917 747
- US-A1- 2016 297 070

## Description

### TECHNICAL FIELD

This application relates to a robotic work tool system and a method for use in a robotic work tool system, providing an improved navigation for robotic work tools, such as lawnmowers, in such a system and such a method.

### BACKGROUND

Automated or robotic work tools such as robotic lawnmowers are becoming increasingly more popular and so is the use of the robotic work tool in various types of operational areas. Furthermore, there is also a need for placing the robotic work tool in a sheltered area when not in use, or alternatively, users are requesting more freedom in selecting the location of the charging station. At the same time, robotic work tools are becoming more and more reliant on satellite navigation, such as in GPS (Global Positioning System) or GNSS systems. However, as is known, in many types of environments - especially environments where there are trees and structures, such as in a garden in a populated area - there are areas where satellite reception is limited. In such systems, the robotic work tool is not able to operate to its full capacity if not always in line of sight with a plurality of satellites. This is sometimes compensated for using beacons to supplement the satellite signals, such as in RTK (Real-Time Kinetics) systems. However, this also requires that the robotic work tool is in line of sight of a beacon or of a plurality of satellite, and thus does not really solve the problems of full freedom when installing a robotic work tool system, especially not when it comes to the placement of the charging station. As the robotic work tool will spend a majority of the time in the charging station it is beneficial if the charging station is placed in a sheltered area, for example under a roof or under bleachers, to protect the robotic work tool from weather such as rain. It is also desired by most users to be able to hide the charging station to enable to the user to fulfill a desired vision of what the garden should look like.

The patent published as JP5917747b1 discloses [machine translation as per EPO webpage] how to reduce bias in work frequency between two work areas that exist through a narrow passage. This is proposed to be solved by a lawn mowing robot that has a first running mode (a) in which it starts running in an arbitrary direction while avoiding an area wire, and a first running mode (a) in which it starts running in an arbitrary direction while avoiding an area wire, and a first running mode (a) in which it starts running in an arbitrary direction while avoiding an area wire. And a second traveling mode (b) in which the vehicle travels in the direction inside the loop of the region wire at the time when a preset milestone event occurs.

Thus, there is a need for an improved manner of providing the advanced functionality of utilizing satellite navigation while still providing full - or at least - increased freedom for where to place the charging station.

### SUMMARY

The inventors are proposing to achieve this need by combining two navigational systems; namely a satellite-based navigation system (such as GPS (or similar) or ERTK (or similar)) and a wire-based navigation system, but to only relay primarily on the wire-based navigation system very specifically during critical navigation maneuvers such as finding the way to the charging station.

It is therefore an object of the teachings of this application to overcome or at least reduce those problems by providing a robotic work tool system comprising a charging station, a wire leading to/from the charging station and a robotic work tool arranged to operate in an operational area, the robotic work tool comprising one or more magnetic sensors, a satellite navigation sensor and a controller, wherein the controller is configured to: cause the robotic work tool to exit the charging station and then cause the robotic work tool to follow the wire navigating based on the one or more magnetic sensors; determine that a release point (RP) has been reached, and in response thereto cause the robotic work tool to navigate in the operational area based on the satellite navigation sensor, wherein the controller is further configured to note where satellite reception is reliably received and to determine an updated release point to be a point where satellite reception is reliably received along the wire (220).

This has the benefit that the robotic work tool is enabled to operate safely even in areas where there is a shadow, which - in particular - enables for locating the charging station in sheltered or hidden areas/locations. The combination of the wire and the satellite navigation provides for a safe zone in the area close to the charging station even in such locations, while still allowing for advanced navigation in the whole or rest of the operational area.

In some embodiments the controller is further configured to prioritize input from the one or more magnetic sensors when following the wire.

In some embodiments the controller is further configured to prioritize input from the satellite sensor when navigating the operational area.

In some embodiments the controller is further configured to note where satellite reception is reliably received during a time of the day and to determine an updated release point to be a point where satellite reception is reliably received along the wire for the time of the day.

In some embodiments the controller is further configured to note where satellite reception is reliably received during a time of the year and to determine an updated release point to be a point where satellite reception is reliably received along the wire for the time of the year.

In some embodiments the release point is at a specified distance along the wire. In some embodiments the specified distance is a length distance. In some embodiments the specified distance is a time distance.

In some embodiments the wire is a guide wire.

In some embodiments the release point is a crossing between the guide wire and a boundary wire.

In some embodiments the wire is a boundary wire.

In some embodiments the release point is a corner formed by the boundary wire.

In some embodiments the charging station comprises a signal generator that is configured to generate a control signal and to transmit the control signal through the wire thereby generating a magnetic field which the electromagnetic sensor(s) is configured to detect.

In some embodiments the satellite navigation sensor is a GPS sensor.

In some embodiments the satellite navigation sensor is a RTK sensor.

In some embodiments the robotic work tool is a robotic lawnmower.

It is also an object of the teachings of this application to overcome the problems by providing a method for use in robotic work tool system comprising a charging station, a wire leading to/from the charging station and a robotic work tool arranged to operate in an operational area, the robotic work tool comprising one or more magnetic sensors, and a satellite navigation sensor, wherein the method comprises: exiting the charging station and then following the wire navigating based on the one or more magnetic sensors; determining that a release point (RP) has been reached, and in response thereto navigating in the operational area based on the satellite navigation sensor, wherein the method further comprises noting where satellite reception is reliably received and to determine an updated release point to be a point where satellite reception is reliably received along the wire (220).

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "alan/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic work tool being a robotic lawnmower according to some example embodiments of the teachings herein;
Figure 2A shows a schematic view of a robotic work tool system according to some example embodiments of the teachings herein;
Figure 2B shows a schematic view of a robotic work tool system according to some example embodiments of the teachings herein;
Figure 2C shows a schematic view of a robotic work tool system according to some example embodiments of the teachings herein;
Figure 2D shows a schematic view of a robotic work tool system according to some example embodiments of the teachings herein;
Figure 2E shows a schematic view of a robotic work tool system according to some example embodiments of the teachings herein;
Figure 2F shows a schematic view of a robotic work tool system according to some example embodiments of the teachings herein;
Figure 2G shows a schematic view of a robotic work tool system according to some example embodiments of the teachings herein; and
Figure 3 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention, which is defined by the appended claims, may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools.

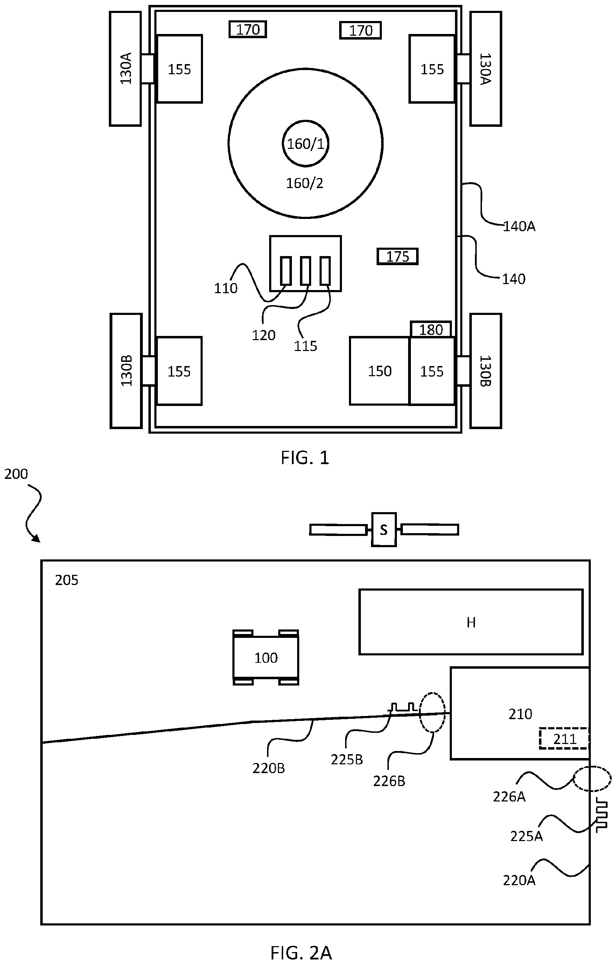

Figure 1 shows a schematic overview of a robotic work tool 100, here exemplified by a robotic lawnmower 100. The robotic work tool 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should be noted that even though the description herein is focussed on the example of a robotic lawnmower, the teachings may equally be applied to other types of robotic work tools, such as robotic watering tools, robotic golf ball collectors, and robotic mulchers to mention a few examples.

In some embodiments, and as will be discussed below, the robotic work tool is a semi-controlled or at least supervised autonomous work tool, such as farming equipment or large lawnmowers, for example riders or comprising tractors being autonomously controlled.

It should also be noted that the robotic work tool is a self-propelled robotic work tool, capable of autonomous navigation within a work area, where the robotic work tool propels itself across or around the work area in a pattern (random or predetermined).

The robotic work tool 100, exemplified as a robotic lawnmower 100, has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150.

It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment (referenced 250 in figure 2A, as an example of a connected device) as discussed in relation to figure 2A below for providing information regarding status, location, and progress of operation to the user equipment as well as receiving commands or settings from the user equipment. Alternatively or additionally, the robotic lawnmower 100 may be arranged to communicate with a server for providing information regarding status, location, and progress of operation as well as receiving commands or settings.

The robotic lawnmower 100 also comprises a work tool 160, which in the example of the robotic lawnmower 100 is a grass cutting device 160, such as a rotating blade 160/2 driven by a cutter motor 160/1. In embodiments where the robotic work tool 100 is exemplified as an automatic grinder, the work tool 160 is a rotating grinding disc.

The robotic lawnmower 100 may further comprise at least one satellite signal navigation sensor 175 configured to provide navigational information (such as position) based on receiving one or more signals from a satellite - possibly in combination with receiving a signal from a beacon. In some embodiments the satellite navigation sensor is a GPS (Global Positioning System) device or other Global Navigation Satellite System (GNSS) device. In some embodiments the satellite navigation sensor is a RTK sensor.

The robotic lawnmower 100 may also or alternatively comprise deduced reckoning sensors 180. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

For enabling the robotic lawnmower 100 to navigate with reference to a wire (referenced 220 in figure 2A), such as a boundary wire (referenced 220A in figure 2A) or a guide wire (referenced 220B in figure 2A), emitting a magnetic field (referenced 226 in figure 2A) caused by a control signal (referenced 225 in figure 2A) transmitted through the wire, the robotic lawnmower 100 is configured to have at least one magnetic field sensor 170 arranged to detect the magnetic field and for detecting the wire and/or for receiving (and possibly also sending) information to/from a signal generator (will be discussed with reference to figure 2A). In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the wire. This enables the controller 110 to determine whether the robotic lawnmower 100 is close to or crossing the boundary wire, or inside or outside an area enclosed by the boundary wire. In some embodiments the robotic work tool 100 is arranged with more than one magnetic sensor 170 which enables for an improved following of a wire where for example the orientation with regards to the wire can be taken into consideration. Using more than one magnetic sensor 170, for example 2 sensors, enables the robotic work tool 100 to follow a wire by straddling the wire with one sensor on either side of the wire.

The robotic lawnmower 100 is in some embodiments arranged to operate according to a map application representing one or more work areas (and possibly the surroundings of the work area(s)) stored in the memory 120 of the robotic lawnmower 100. The map application may be generated or supplemented as the robotic lawnmower 100 operates or otherwise moves around in the work area 205. In some embodiments, the map application includes one or more start regions and one or more goal regions for each work area. In some embodiments, the map application also includes one or more transport areas. The robotic work tool 100 is in some embodiments arranged to navigate according to the map based on the satellite navigation sensor 175.

Figure 2A shows a robotic work tool system 200 in some embodiments. The schematic view is not to scale. The robotic work tool system 200 comprises one or more robotic work tools 100 according to the teachings herein. It should be noted that the operational area 205 shown in figure 2A is simplified for illustrative purposes.

The robotic work tool system 200 further comprises a station 210 possibly at a station location. A station location may alternatively or additionally indicate a service station, a parking area, a charging station or a safe area where the robotic work tool may remain for a time period between or during operation session.

The robotic work tool system comprises a boundary wire 220A through which a control signal 225A is transmitted thereby generating a magnetic field 226A, and which magnetic field 226A is sensed by sensor (170) in the robotic work tool 100. In some embodiments the control signal 225A is generated by a signal generator 211 comprised in the station 210.

In addition to a boundary wire 220A, the robotic work tool system may also, in some embodiments, comprise one or more guide wires 220B for guiding the robotic work tool 100 to a specific portion of the operational area, such as to and/or from the charging station 210. As is known a second control signal 225B (also referred to as a guide signal which may be part of the control signal 225A), is transmitted through the guide wire 220B for enabling the robotic work tool 100 to recognize and differentiate the guide wire 220B from the boundary wire 220A. In some embodiments the control signal 225B for the guide wire 220B is also generated by the signal generator 211 comprised in the station 210.

The control signal 225 is an electric signal that generates a magnetic field 226 around the wire through which the control signal is transmitted. In some embodiments, the control signal 225A (including or also the guide signal 225B) is a pulsed signal comprising one or more pulses. In some embodiments, the control signal 225A (including or also the guide signal 225B) is a CDMA signal.

In addition to the boundary generated by the boundary wire 220A, the robotic work tool 100 may also be arranged to operate according to a virtual boundary specified in the map application.

As with figure 1, the robotic work tool(s) is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within a work area.

In some embodiments the robotic work tool is arranged or configured to traverse and operate in work areas that are not essentially flat, but contain terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in a work area that contains obstacles that are not easily discerned from the ground. Examples of such are grass or moss-covered rocks, roots or other obstacles that are close to ground and of a similar colour or texture as the ground. The robotic work tool is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 205 exemplified with referenced to figure 2A, may thus be such a nonuniform work area as disclosed in this paragraph that the robotic work tool is arranged to traverse and/or operate in.

As is shown in figure 2A there may be obstacles such as houses, structures, trees to mention a few examples that block signal reception in certain areas, hereafter referred to as shadowed areas. In figure 2A such obstacles are indicated and referenced H (as in house).

As is illustrated in figure 2A, the charging station may be placed (or desired to be placed) in an area where one or more structures blocks the satellite reception. In figure 2A the house blocks the satellite S in the area of the charging station 210.

It should be noted herein that for illustrative purposes only a single satellite is shown, whereas - and as a skilled person would know - it requires a reliable reception of signals from at least 3 satellites and/or beacons for the robotic work tool to be able to determine a position with any kind of accuracy. In fact, in most implementations many more signals are required. It should also be noted that even in a shadowed area, the robotic work tool may be able to receive signals from more than three satellites, but not at a signal level where a reliable lock can be established. A shadowed area can thus be defined as an area where the robotic work tool is unable to receive sufficiently reliable signal reception, i.e. when the number of signals received reliably is under a threshold number, and where a signal is reliably received when it is received at a signal quality level exceeding a threshold value.

It should be noted that even though it is not specifically shown, a beacon is also arranged in or adjacent to the work area in embodiments where the robotic work tool is arranged to utilize RTK navigation.

In the below, several embodiments of how the robotic work tool may be adapted will be disclosed. It should be noted that all embodiments may be combined in any combination providing a combined adaptation of the robotic work tool.

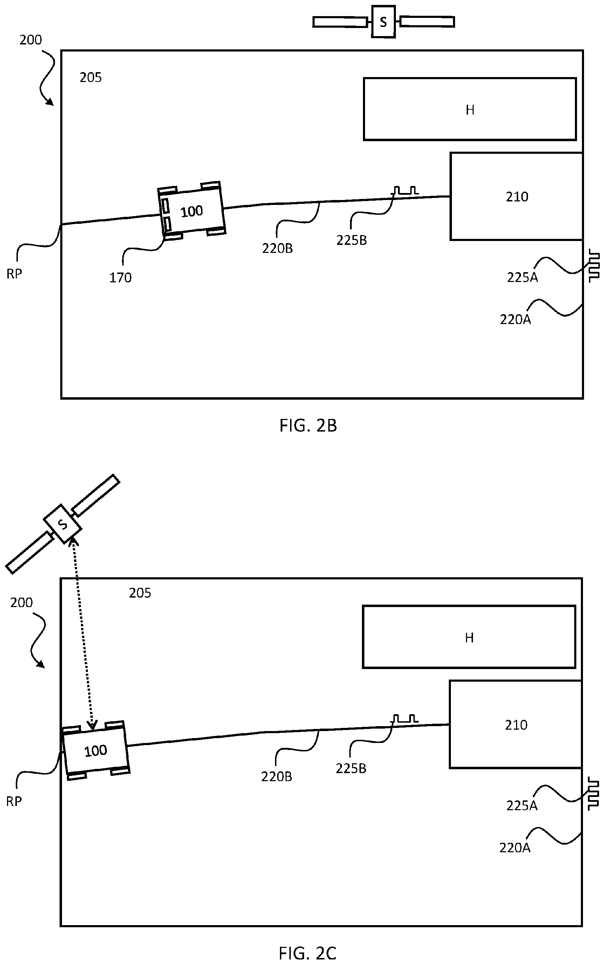

Figure 2B shows a simplified view of a robotic work tool system 200 as in figure 2A, where the robotic work tool 100 is configured to follow the guide wire 220B when leaving (or going to) the charging station 210. By utilizing the guide cable 220B, the robotic work tool 100 is enabled to safely operate with sufficient accuracy when leaving (or returning to) the charging station 210 even when the charging station 210 is placed in a signal shadowed area. Comparing with for example following a boundary wire 220A, the following of the guide wire 220B is safer as there may be some navigational difficulties in finding the boundary wire 220A as the robotic work tool 100 exits the charging station 210 when the robotic work tool is unable to navigate using the satellite navigation sensor 175.

However, as in most systems, the guide wire 220A leads to a base plate (or other location of entry) of the charging station 210, this wire is much easier to find. The same applies when finding the way to the charging station 210.

The robotic work tool 100 is thus arranged to travel away from the charging station 210 along the guide wire 220B navigation primarily based on the magnetic sensor(s) 170. The satellite sensors 175 may still be utilized, but the magnetic sensor(s) 170 overrule the satellite sensors 175, or rather the controller 110 is configured to prioritize the input from the magnetic sensor(s) 170 over the input from the satellite sensors 175.

Figure 2C shows a simplified view of a robotic work tool system 200 as in figures 2A and 2B, where the robotic work tool 100 is configured to navigate along the guide wire 220B until a release point RP is reached. In the example of figure 2B the release point is the crossing between or connection with the boundary wire 220A. This provides an easily recognizable point that can be detected accurately by the magnetic sensor(s) 170 (or rather based on the input from the magnetic sensor(s) 170.

As the robotic work tool 100 reaches the release point the controller is configured to start navigation based on the satellite navigation sensor 175. If connection with the satellites and possibly beacons is not established yet, it is established at the release point as indicated by the dotted arrow in figure 2B.

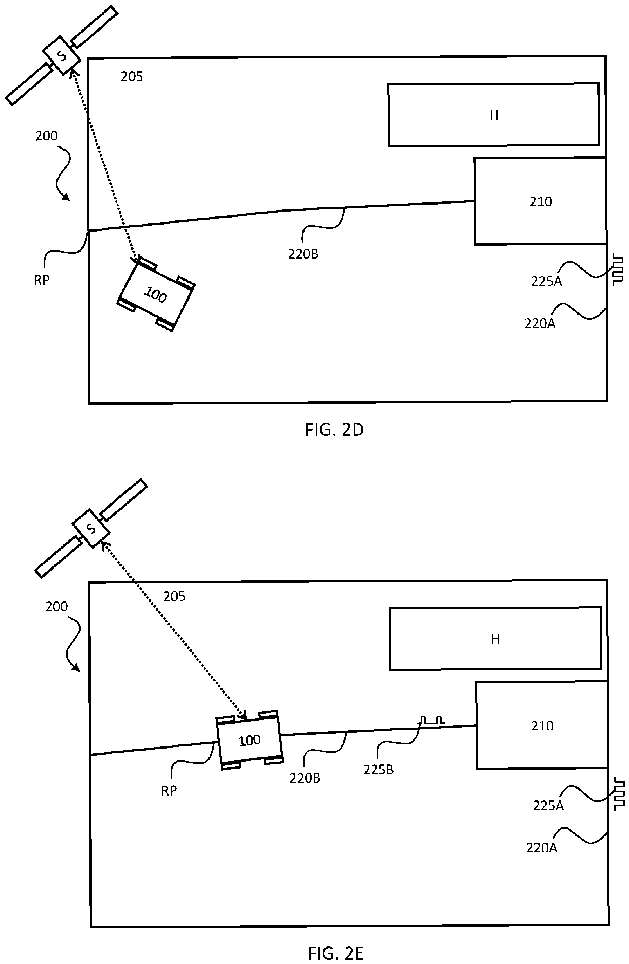

Figure 2D shows a simplified view of a robotic work tool system 200 as in figures 2A, 2B and 2C, where the robotic work tool 100 navigates primarily based on the satellite navigation sensor 175.

This allows for a safe and reliable transport from a shadowed area to a known point where it is safe to release from the guide wire and start trusting the satellite navigation.

Figure 2E shows a simplified view of a robotic work tool system 200 as in figures 2A, 2B, 2C and 2D, where the robotic work tool 100 is further configured to while operating/navigating based on the magnetic sensor(s) 170 while following the guide wire 220B, also noting the satellite reception at various points, for example at intervals, at some points or continuously. This enables the robotic work tool 100 to determine points along the guide wire 220B where satellite (beacon) signals are always reliably received, and determine that such a point is to be used as a release point. In figure 2D, the release point has been moved further in along the guide wire 220B enabling for an earlier start of the more advanced navigation thereby reducing the time needed for transporting.

In some such embodiments, the robotic work tool 100 is further configured to note the time of day along with the signal reception and thereby noting points where signal reception is always reliable at that time of the day.

In some such embodiments, the robotic work tool 100 is further or alternatively configured to note the time of the year along with the signal reception and thereby noting points where signal reception is always reliable at that time of the year, enabling the robotic work tool to accommodate for changes in seasons.

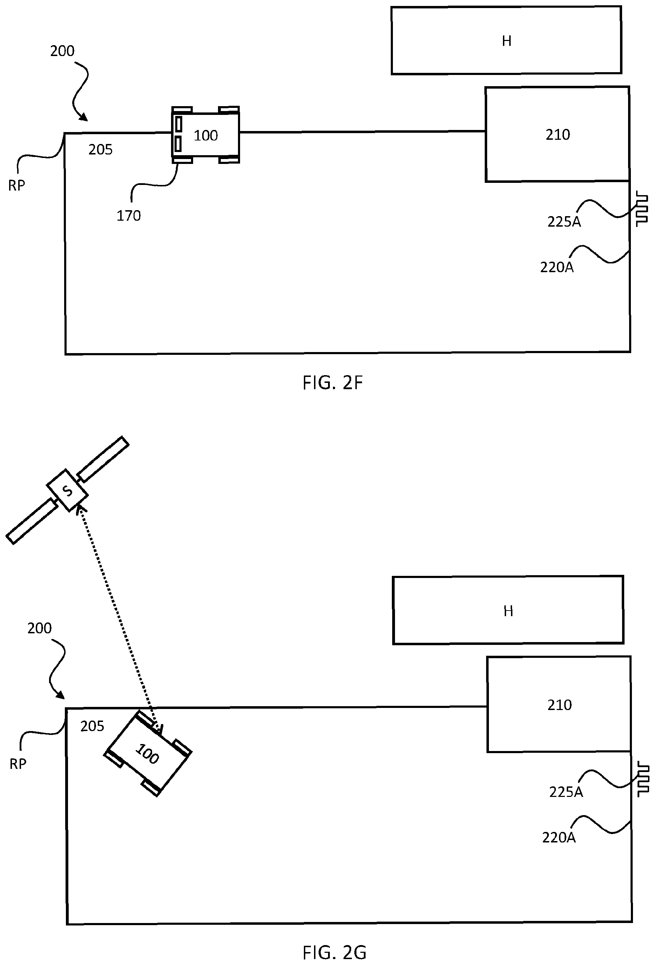

Figure 2F shows a simplified view of a robotic work tool system 200 as in figures 2A to2E, but where the boundary wire 220A is arranged to lead straight to an entrance to the charging station 210, the boundary wire 220A thereby functioning as a guide cable 220B as in figures 2A to 2E. In such an embodiment, the robotic work tool may thus follow the boundary wire to and from the charging station in the same manner as discussed with regards to following the guide wire in figures 2A to 2E. However, as the boundary wire 220A will not cross or connect to the boundary wire 220B the release point is defined differently. In some embodiments the release point is a point at a prespecified distance along the wire, whereby the robotic work tool is configured to follow the boundary wire 220B for the respecified distance navigating based on the magnetic sensor(s) 170 and then start to navigate based on the satellite navigation sensor 175. In some such embodiments, the distance is a time distance, for example 5, 10, 15, 20, 25 or more meters. In some alternative such embodiments, the distance is a length distance, for example 5, 10, 15, 20, 25 or more seconds.

It should be noted that such release points may also be utilized in a system where a guide wire is followed.

In some embodiments the release point is at a point that is easily identifiable along the boundary wire, such as in a corner and as exemplified in figure 2F. As would be understood, the release point need not be a physical point or even determined by coordinates.

As shown in figure 2G, the robotic work tool 100 switches to navigate according to the satellite sensor 15 as it reaches the release point RP.

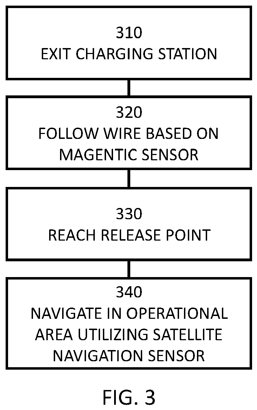

Figure 3 shows a flowchart for a general method according to herein. The method is for use in a robotic work tool as in figure 1 in a manner as discussed above in relation to figures 2A to 2G. The method comprises the robotic work tool 100 exiting 310 the charging station 210 and following 320 the wire 220 navigating based on the one or more magnetic sensors 170. As it is determined 330 that a release point has been reached, the robotic work tool 100 navigates 340 in the operational area 205 based on the satellite navigation sensor 175.

In some embodiments the navigating in the operational area is to perform an operating pattern or other navigation according to the map, and excludes the following of the wire - even if technically, the wire may be in the operational area.

It should be noted that even though the discussion herein has been focused on the robotic work tool leaving the charging station 210, the teachings herein may also be used to find the charging station, whereby the robotic work tool 100 navigates according to the satellite navigation sensor 175 to find the guide wire (or other wire to be followed) and then follows the guide wire to the charging station based on the one or more magnetic sensor(s) 170. This solution is not covered by the appended claims.

## Claims

1. A robotic work tool system (200) comprising a charging station (210), a wire (220) leading to/from the charging station (210) and a robotic work tool (100) arranged to operate in an operational area (205), the robotic work tool (100) comprising one or more magnetic sensors (170), a satellite navigation sensor (175) and a controller (110), wherein the controller (110) is configured to:
cause the robotic work tool (100) to exit the charging station (210) and then
cause the robotic work tool (100) to follow the wire (220) navigating based on the one or more magnetic sensors (170);
determine that a release point (RP) has been reached, and in response thereto
cause the robotic work tool (100) to navigate in the operational area (205) based on the satellite navigation sensor (175), wherein the robotic work tool system (200) is **characterized in that** the controller is further configured to note where satellite reception is reliably received and to determine an updated release point to be a point where satellite reception is reliably received along the wire (220).

2. The robotic work tool system (200) according to claim 1, wherein the controller (110) is further configured to
prioritize input from the one or more magnetic sensors (170) when following the wire (220).

3. The robotic work tool system (200) according to claim 1 or 2, wherein the controller (110) is further configured to prioritize input from the satellite sensor (175) when navigating the operational area (205).

4. The robotic work tool system (200) according to claim 1, wherein the controller is further configured to note where satellite reception is reliably received during a time of the day and to determine an updated release point to be a point where satellite reception is reliably received along the wire (220) for the time of the day.

5. The robotic work tool system (200) according to claim 1 or 4, wherein the controller is further configured to note where satellite reception is reliably received during a time of the year and to determine an updated release point to be a point where satellite reception is reliably received along the wire (220) for the time of the year.

6. The robotic work tool system (200) according to any preceding claim, wherein the release point is at a specified distance along the wire (220).

7. The robotic work tool system (200) according to any preceding claim, wherein the wire is a guide wire (220B).

8. The robotic work tool system (200) according to claim 7, wherein the release point is a crossing between the guide wire (220B) and a boundary wire (220A).

9. The robotic work tool system (200) according to any of claims 1 to 6, wherein the wire is a boundary wire (220A).

10. The robotic work tool system (200) according to claim 9, wherein the release point is a corner formed by the boundary wire (220A).

11. The robotic work tool system (200) according to any preceding claim, wherein the charging station (210) comprises a signal generator (211) that is configured to generate a control signal (225) and to transmit the control signal (225) through the wire (220) thereby generating a magnetic field (226) which the electromagnetic sensor(s) (170) is configured to detect.

12. The robotic work tool system (200) according to any preceding claim, wherein the satellite navigation sensor is a GPS sensor (175) or wherein the satellite navigation sensor is a RTK sensor (175).

13. The robotic work tool system (200) according to any preceding claim, wherein the robotic work tool (100) is a robotic lawnmower (100).

14. A method for use in a robotic work tool system (200) comprising a charging station (210), a wire (220) leading to/from the charging station (210) and a robotic work tool (100) arranged to operate in an operational area (205), the robotic work tool (100) comprising one or more magnetic sensors (170), and a satellite navigation sensor (175), wherein the method comprises:
exiting the charging station (210) and then
following the wire (220) navigating based on the one or more magnetic sensors (170);
determining that a release point (RP) has been reached, and in response thereto navigating in the operational area (205) based on the satellite navigation sensor (175), wherein the method is **characterized in that it** further comprises noting where satellite reception is reliably received and to determine an updated release point to be a point where satellite reception is reliably received along the wire (220).

## Patentansprüche

1. System (200) mit robotischem Arbeitswerkzeug, umfassend eine Ladestation (210), ein Kabel (220), das zu/weg von der Ladestation (210) führt, und ein robotisches Arbeitswerkzeug (100), das dafür angeordnet ist, in einem Operationsbereich (205) zu operieren, wobei das robotische Arbeitswerkzeug (100) einen oder mehrere Magnetsensoren (170), einen Satellitennavigationssensor (175) und eine Steuerung (110) umfasst, wobei die Steuerung (110) für Folgendes gestaltet ist:
Bewirken, dass das robotische Arbeitswerkzeug (100) die Ladestation (210) verlässt, und dann
Bewirken, dass das robotische Arbeitswerkzeug (100) dem Kabel (220) folgt, navigierend auf der Grundlage des einen oder der mehreren Magnetsensoren (170),
Bestimmen, dass ein Freigabepunkt (RP) erreicht wurde, und in Reaktion darauf:
Bewirken, dass das robotische Arbeitswerkzeug (100) in dem Operationsbereich (205) auf der Grundlage des Satellitennavigationssensors (175) navigiert, wobei das System (200) mit robotischem Arbeitswerkzeug
**dadurch gekennzeichnet ist, dass** die Steuerung ferner dafür gestaltet ist, zu vermerken, wo der Satellitenempfang verlässlich empfangen wird, und einen aktualisierten Freigabepunkt als einen Punkt an dem Kabel (220) zu bestimmen, an dem der Satellitenempfang verlässlich empfangen wird.

2. System (200) mit robotischem Arbeitswerkzeug nach Anspruch 1, wobei die Steuerung (110) ferner für Folgendes gestaltet ist:
Priorisieren eines Eingangs von dem einen oder den mehreren Magnetsensoren (170) beim Verfolgen des Kabels (220).

3. System (200) mit robotischem Arbeitswerkzeug nach Anspruch 1 oder 2, wobei die Steuerung (110) ferner dafür gestaltet ist, beim Navigieren in dem Operationsbereich (205) einen Eingang von dem Satellitensensor (175) zu priorisieren.

4. System (200) mit robotischem Arbeitswerkzeug nach Anspruch 1, wobei die Steuerung ferner dafür gestaltet ist zu vermerken, wo während einer Tageszeit ein Satellitenempfang verlässlich empfangen wird, und einen aktualisierten Freigabepunkt als einen Punkt an dem Kabel (220) für diese Tageszeit zu bestimmen, an dem der Satellitenempfang verlässlich empfangen wird.

5. System (200) mit robotischem Arbeitswerkzeug nach Anspruch 1 oder 4, wobei die Steuerung ferner dafür gestaltet ist zu vermerken, wo während einer Zeit des Jahres ein Satellitenempfang verlässlich empfangen wird, und einen aktualisierten Freigabepunkt als einen Punkt an dem Kabel (220) für diese Zeit des Jahres zu bestimmen, an dem der Satellitenempfang verlässlich empfangen wird.

6. System (200) mit robotischem Arbeitswerkzeug nach einem vorhergehenden Anspruch, wobei sich der Freigabepunkt in einem spezifizierten Abstand an dem Kabel(220) befindet.

7. System (200) mit robotischem Arbeitswerkzeug nach einem vorhergehenden Anspruch, wobei das Kabel ein Führungskabel (220B) ist.

8. System (200) mit robotischem Arbeitswerkzeug nach Anspruch 7, wobei der Freigabepunkt ein Kreuzungspunkt zwischen dem Führungskabel (220B) und einem Begrenzungskabel (220A) ist.

9. System (200) mit robotischem Arbeitswerkzeug nach einem der Ansprüche 1 bis 6, wobei das Kabel ein Begrenzungskabel (220A) ist.

10. System (200) mit robotischem Arbeitswerkzeug nach Anspruch 9, wobei der Freigabepunkt eine Ecke ist, die von dem Begrenzungskabel (220A) gebildet wird.

11. System (200) mit robotischem Arbeitswerkzeug nach einem vorhergehenden Anspruch, wobei die Ladestation (210) einen Signalgenerator (211) umfasst, der dafür gestaltet ist, ein Steuersignal (225) zu erzeugen und das Steuersignal (225) durch das Kabel (220) zu übertragen, wodurch ein Magnetfeld (226) erzeugt wird, das zu erkennen die elektromagnetischen Sensoren (170) gestaltet sind.

12. System (200) mit robotischem Arbeitswerkzeug nach einem vorhergehenden Anspruch, wobei der Satellitennavigationssensor ein GPS-Sensor (175) ist oder wobei der Satellitennavigationssensor ein RTK-Sensor (175) ist.

13. System (200) mit robotischem Arbeitswerkzeug nach einem vorhergehenden Anspruch, wobei das robotische Arbeitswerkzeug (100) ein Rasenroboter (100) ist.

14. Verfahren zur Verwendung in einem System (200) mit robotischem Arbeitswerkzeug, das eine Ladestation (210), ein Kabel (220), das zu/weg von der Ladestation (210) führt, und ein robotisches Arbeitswerkzeug (100) umfasst, das dafür angeordnet ist, in einem Operationsbereich (205) zu operieren, wobei das robotische Arbeitswerkzeug (100) einen oder mehrere Magnetsensoren (170), einen Satellitennavigationssensor (175) umfasst, wobei das Verfahren Folgendes umfasst:
Verlassen der Ladestation (210) und dann
Verfolgen des Kabels (220), navigierend auf der Grundlage des einen oder der mehreren Magnetsensoren (170),
Bestimmen, dass ein Freigabepunkt (RP) erreicht wurde, und in Reaktion darauf:
Navigieren in dem Operationsbereich (205) auf der Grundlage des Satellitennavigationssensors (175), wobei das Verfahren **dadurch gekennzeichnet ist, dass** es ferner das Vermerken umfasst, wo der Satellitenempfang verlässlich empfangen wird, und das Bestimmen eines aktualisierten Freigabepunktes als einen Punkt an dem Kabel (220), an dem der Satellitenempfang verlässlich empfangen wird.

## Revendications

1. Système d'outil de travail robotique (200) comprenant une station de recharge (210), un fil (220) conduisant à/depuis la station de recharge (210) et un outil de travail robotique (100) agencé pour fonctionner dans une zone de fonctionnement (205), l'outil de travail robotique (100) comprenant un ou plusieurs capteurs magnétiques (170), un capteur de navigation par satellite (175) et une unité de commande (110), dans lequel l'unité de commande (110) est configurée pour :
faire en sorte que l'outil de travail robotique (100) sorte de la station de recharge (210), et puis
faire en sorte que l'outil de travail robotique (100) suive le fil (220), en navigant, à l'aide de l'un ou des plusieurs capteurs magnétiques (170) ;
déterminer qu'un point de libération (RP) a été atteint, et en réponse à ceci
faire en sorte que l'outil de travail robotique (100) navigue dans la zone de fonctionnement (205), à l'aide du capteur de navigation par satellite (175), dans lequel le système d'outil de travail robotique (200) est
**caractérisé en ce que** l'unité de commande est en outre configurée pour noter l'endroit où une réception par satellite est reçue de façon fiable et pour déterminer un point de libération mis à jour pour qu'il soit un point où la réception par satellite est reçue de façon fiable le long du fil (220).

2. Système d'outil de travail robotique (200) selon la revendication 1, dans lequel l'unité de commande (110) est en outre configurée pour
donner la priorité à une entrée provenant de l'un ou des plusieurs capteurs magnétiques (170) lorsque le fil (220) est suivi.

3. Système d'outil de travail robotique (200) selon la revendication 1 ou 2, dans lequel l'unité de commande (110) est en outre configurée pour donner la priorité à une entrée provenant du capteur par satellite (175) lors de la navigation dans la zone de fonctionnement (205).

4. Système d'outil de travail robotique (200) selon la revendication 1, dans lequel l'unité de commande est en outre configurée pour noter l'endroit où la réception par satellite est reçue de façon fiable durant une période de la journée et pour déterminer un point de libération mis à jour pour qu'il soit un point où la réception par satellite est reçue de façon fiable le long du fil (220) pendant la période de la journée.

5. Système d'outil de travail robotique (200) selon la revendication 1 ou 4, dans lequel l'unité de commande est en outre configurée pour noter l'endroit où la réception par satellite est reçue de façon fiable durant une période de l'année et pour déterminer un point de libération mis à jour pour qu'il soit un point où la réception par satellite est reçue de façon fiable le long du fil (220) pendant la période de l'année.

6. Système d'outil de travail robotique (200) selon une quelconque revendication précédente, dans lequel le point de libération est à une distance spécifiée le long du fil (220).

7. Système d'outil de travail robotique (200) selon une quelconque revendication précédente, dans lequel le fil est un fil de guidage (220B).

8. Système d'outil de travail robotique (200) selon la revendication 7, dans lequel le point de libération est un croisement entre le fil de guidage (220B) et un fil de limite (220A).

9. Système d'outil de travail robotique (200) selon l'une quelconque des revendications 1 à 6, dans lequel le fil est un fil de limite (220A).

10. Système d'outil de travail robotique (200) selon la revendication 9, dans lequel le point de libération est un coin formé par le fil de limite (220A).

11. Système d'outil de travail robotique (200) selon une quelconque revendication précédente, dans lequel la station de recharge (210) comprend un générateur de signal (211) qui est configuré pour générer un signal de commande (225) et pour transmettre le signal de commande (225) à travers le fil (220), ainsi générant un champ magnétique (226) que le(s) capteur(s) électromagnétique(s) (170) est (sont) configuré(s) pour détecter.

12. Système d'outil de travail robotique (200) selon une quelconque revendication précédente, dans lequel le capteur de navigation par satellite est un capteur GPS (175) ou dans lequel le capteur de navigation par satellite est un capteur RTK (175).

13. Système d'outil de travail robotique (200) selon une quelconque revendication précédente, dans lequel l'outil de travail robotique (100) est une tondeuse à gazon robotique (100).

14. Procédé destiné à être utilisé dans un système d'outil de travail robotique (200) comprenant une station de recharge (210), un fil (220) conduisant à/depuis la station de recharge (210) et un outil de travail robotique (100) agencé pour fonctionner dans une zone de fonctionnement (205), l'outil de travail robotique (100) comprenant un ou plusieurs capteurs magnétiques (170), et un capteur de navigation par satellite (175), dans lequel le procédé comprend les faits de :
sortir de la station de recharge (210) et puis suivre le fil (220) en navigant, à l'aide de l'un ou des plusieurs capteurs magnétiques (170) ;
déterminer qu'un point de libération (RP) a été atteint, et en réponse à ceci naviguer dans la zone de fonctionnement (205), à l'aide du capteur de navigation par satellite (175), dans lequel le procédé est **caractérisé en ce qu'**il comprend en outre les faits de noter l'endroit où une réception par satellite est reçue de façon fiable et de déterminer un point de libération mis à jour pour qu'il soit un point où la réception par satellite est reçue de façon fiable le long du fil (220) .
